# EUROPEAN PATENT APPLICATION

(11) **EP 2 405 116 A2**
(43) Date of publication of application: **11.01.2012**
(21) Application number: 11172290.6
(22) Date of filing: 30.06.2011
(51) Int. Cl.: F02C 7/32

(54) **Accessory Gearbox Assembly**

(30) Priority: 07.07.2010 US 831595
(71) Applicant: Hamilton Sundstrand Corporation, Windsor Locks, CT 06096-1010 (US)
(72) Inventor: Short, Keith E., Rockford, IL 61111 (US); Blewett, Michael R., Stillman Valley, IL 61084 (US); Franckowiak, Timothy J., Rockford, IL 61104 (US)
(74) Representative: Tomlinson, Kerry John

(57) **Abstract**

An accessory gearbox assembly for an aircraft includes one or more intermeshed gears (16) disposed in a gearbox housing (18) and configured to transfer rotational energy from an engine core (12). An accessory component (22) has a spur gear (28) located at least partially in an accessory housing (30). The spur gear is meshed with a gear (16) of the one or more gears thereby transferring rotational energy from the gearbox (10) to the accessory component. A method for providing rotational energy to an accessory component (22) at an accessory gearbox (10) includes providing rotational energy to one or more intermeshed gears (16) of an accessory gearbox and locating an accessory component at the accessory gearbox. The accessory component (22) includes a spur gear (28) disposed at least partially in an accessory housing. The spur gear (28) is meshed with a gear (16) of the one or more gears and rotational energy is transferred to the accessory component via the spur gear.

## Description

### BACKGROUND OF THE INVENTION

The subject matter disclosed herein relates to gearboxes for aircraft. More specifically, the subject disclosure relates to connection of accessories to an aircraft gearbox.

A gearbox transfers power from a main shaft of an aircraft engine to a number of engine and aircraft accessories. A typical suite of accessories may include an electrical generator, hydraulic pump, fuel pump, starter, and oil lubrication and scavenging pump. Typically, these accessories are connected to the gearbox via a coaxial spline between a gearbox gear and the gearbox. This means of connecting accessories to the gearbox forces the accessories to be located at a face of the gearbox where packaging space is limited. Further, because of the direct spline connection, speed of the accessory is determined by the gear speed of the gearbox. Also, locating the accessories on the face of the gearbox increases cantilevering and unequal moments on the gearbox faces requiring increased structural support for the gearbox faces, which increases weight of the gearbox.

### BRIEF DESCRIPTION OF THE INVENTION

According to one aspect of the invention, an accessory gearbox assembly for an aircraft includes one or more intermeshed gears disposed in an accessory gearbox housing and configured to transfer rotational energy from an engine core. An accessory component has an accessory spur gear located at least partially in the accessory gearbox housing. The accessory spur gear is meshed with a gear within the gearbox housing thereby transferring rotational energy from the gearbox to the accessory component.

According to another aspect of the invention, a method for providing rotational energy to an accessory component at an accessory gearbox includes providing rotational energy to one or more intermeshed gears of an accessory gearbox and locating an accessory component at the accessory gearbox. The gearbox component includes a spur gear disposed at least partially in an accessory housing. The spur gear is meshed with a gear of the one or more gears and rotational energy is transferred from the one or more gears to the accessory component via the spur gear.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 is a schematic view of an embodiment of an accessory gearbox for an aircraft;

FIG. 2 is an exploded view of an embodiment of a seal configuration for a gearbox; and

FIG. 3 is a schematic view of a crowned gear interface for a gearbox.

The detailed description explains embodiments of the invention, together with advantages and features, by way of example with reference to the drawings.

### DETAILED DESCRIPTION OF THE INVENTION

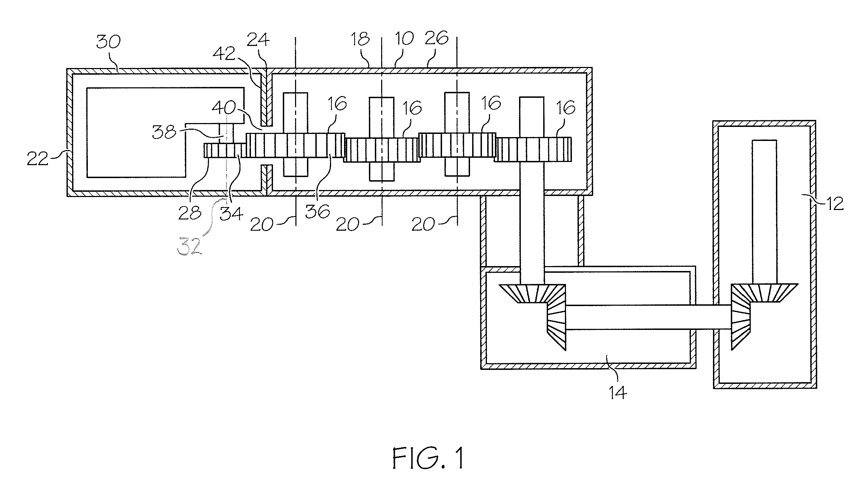

Shown in FIG. 1 is a schematic view of an accessory gearbox 10 for an aircraft. The gearbox 10 is connected to an engine core 12 via a power transfer shaft 14. Rotational energy from the engine core 12 is transferred to the gearbox 10 via the transfer shaft 14 and drives one or more gears 16 in the gearbox 10. The gears 16 of the gearbox 10 may be intermeshed and are contained in a gearbox housing 18. As shown in FIG. 1, the gears 16 are disposed such that their axes of rotation 20 are substantially parallel. It is to be appreciated that other arrangements of the gears 16 of the gearbox 10 are contemplated within the present scope.

The gearbox 10 is configured to provide rotational energy to one or more accessory components 22 in operable communication with the gearbox 10. The accessory components 22 may be, for example, a fuel pump, lubrication pump, a hydraulic pump, or a cooling fan. In the embodiment of FIG. 1 at least one of the accessory components 22 is located at a longitudinal end 24 of the gear box 10, the longitudinal end 24 herein defined as a surface of the gearbox 10 substantially parallel to the axes of rotation 20 of the gears 16 as opposed to a face 26 of the gearbox 10 herein defined as a surface of the gearbox 10 substantially perpendicular to the axes of rotation 20 of the gears 16.

The accessory component 22 is operably connected to the gearbox 10 via a spur gear 28, which rotates about spur axis 32. One of the gearbox gears 16 is disposed at least partially within an accessory housing 30. The spur gear 28 has a plurality of spur teeth 34 that extend toward a plurality of gear teeth 36 of one of the gears 16 and mesh therewith. The spur gear 28 meshes with the gear 16 such that rotation of the gear 16 drives rotation of the spur gear 28, which in turn drives rotation of an accessory shaft 38 to provide power to the accessory component 22. The spur axis 32 of rotation is substantially parallel to a gear axis 20 of rotation of the gear 16 with which the spur gear 28 is meshed.

Connection of the accessory component 22 to the gearbox 10 via the spur gear 28 allows for simple adjustment of the rotational speed of the spur gear 28 and therefore the rotational energy provided to the accessory component 22 by changing the number of spur teeth 34 in the spur gear 28 or by changing the number of gear teeth 36 in the gear 16 with which the spur gear 28 meshes.

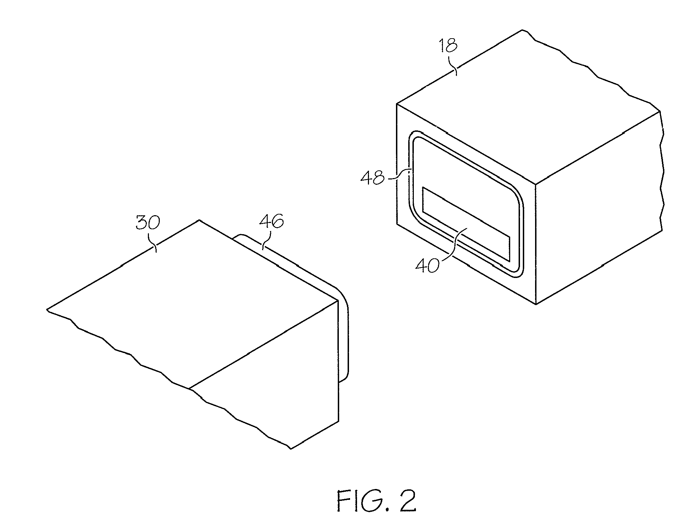

To allow meshing of the spur gear 28 and the gear 16, the gearbox housing 18 includes a gear opening 40 in the longitudinal end 24 and the accessory housing 30 includes a complimentary spur opening 42 to allow one of the gearbox gears 16 and the accessory spur gear 28 to extend therethrough and to mesh. To seal the interface between the gearbox 10 and the accessory component 22 and prevent contaminants from entering the gearbox 10 through the gear opening 40 and from entering the accessory component 22 through the spur opening 42, a seal is provided between the accessory component 22 and the gearbox 10. As shown in FIG. 2, the seal may be an seal plate 46 disposed at the accessory housing 30 surrounding the spur opening 42 which extends into a complimentary seal groove 48 surrounding the gear opening 40 in the gearbox housing 18. While the embodiment of FIG. 2 includes the seal plate 46 disposed at the accessory housing 30, it is to be appreciated that in other embodiments the interface between the gearbox housing 10 and the accessory housing 30 may be sealed by other means such as a gasket or formed elastomer.

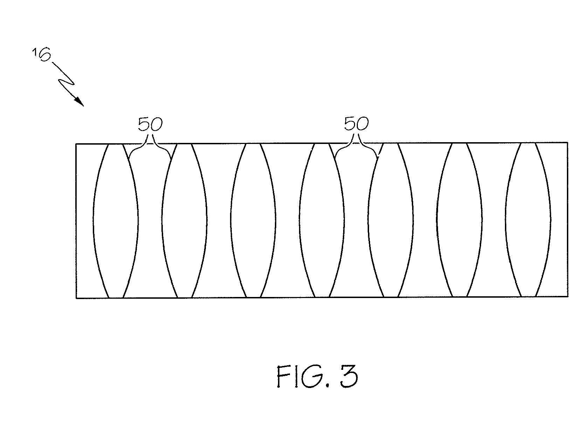

Referring now to FIG. 3, one or more of the gears 16 and the spur gear 28 may be configured with a crowned shape. Crowning describes a curvature of faces of gear teeth 50. The crowned shape prevents the gear teeth 50 from being point/line loaded when contacting the mating gear.

Referring again to FIG. 1, locating the accessory component 22 at the longitudinal end 24 reduces the cantilever forces on the face 26 of the gearbox 10. Further, the accessory component 22 positioned at the longitudinal end 24 distributes accessory component 22 moment reaction evenly between the faces 26 of the gearbox 10. These factors allow the gearbox 10 and gearbox housing 18 to be constructed more lightly.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention defined by the attached claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An accessory gearbox assembly for an aircraft comprising:
one or more intermeshed gears (16) disposed in a gearbox housing (18) and configured to transfer rotational energy from an engine core (12); and
an accessory component (22) having a spur gear (28) disposed at least partially in an accessory housing (30), the spur gear meshed with a gear of the one or more gears for transferring rotational energy from the gearbox to the accessory component.

2. The accessory gearbox assembly of Claim 1, wherein the spur gear (28) has a spur axis of rotation substantially parallel to a gear axis of rotation (20) of the gear (16) with which the spur gear is meshed.

3. The accessory gearbox assembly of Claim 1 or 2, wherein the accessory component (22) is disposed at a longitudinal end of the gearbox (10).

4. The accessory gearbox assembly of Claim 1, 2 or 3, wherein the spur gear (28) extends toward the gear (16) through a spur opening in the accessory housing (30).

5. The accessory gearbox assembly of Claim 1, 2 or 3, wherein the gear (16) extends toward the spur gear (28) through a gear opening in the gearbox housing (18).

6. The accessory gearbox assembly of any preceding Claim, wherein at least one of the spur gear (28) and the gear (16) are crowned.

7. The accessory gearbox assembly of any preceding Claim, further comprising a seal disposed between the gearbox housing (18) and the accessory housing (30).

8. The accessory gearbox assembly of any preceding Claim, wherein the accessory component (22) is a fuel pump, lubrication pump, hydraulic pump, or a cooling fan.

9. A method for providing rotational energy to an accessory component (22) at an accessory gearbox (10) comprising:
providing rotational energy to one or more intermeshed gears (16) of an accessory gearbox (10);
locating an accessory component (22) at the accessory gearbox 10), the accessory component including a spur gear (28) disposed at least partially in an accessory housing (30);
meshing the spur gear (28) with a gear of the one or more gears (16);
and
transferring rotational energy from the one or more gears to the accessory component via the spur gear.

10. The method of Claim 9, further comprising rotating the spur gear (28) about a spur axis of rotation substantially parallel to a gear axis of rotation (20) of the gear (16) with which the spur gear is meshed.

11. The method of Claim 9 or 10, wherein locating an accessory component (22) at the accessory gearbox (10) comprises locating the accessory component at a longitudinal end of the accessory gearbox.

12. The method of Claim 9, 10 or 11, further comprising extending the spur gear (28) toward the gear (16) through a spur opening in the accessory housing (30).

13. The method of Claim 9, 10 or 11, further comprising extending the gear (16) toward the spur gear (28) through a gear opening in a gearbox housing (18) of the accessory gearbox.

14. The method of any one of Claims 9 to 13, further comprising adjusting the rotational speed of the accessory component (22) by changing a numerical count of spur teeth in the spur gear (28) and a numerical count of gear teeth in the gear (16).

15. The method of any one of Claims 9 to 14, comprising providing rotational energy to the one or more gears (16) via an operable connection to an engine core.
